# EUROPEAN PATENT SPECIFICATION

(11) **EP 2 037 396 B1**
(45) Date of publication and mention of the grant of the patent: **15.12.2010**
(21) Application number: 07116195.4
(22) Date of filing: 12.09.2007
(51) Int. Cl.: G06K 19/04, G06K 19/077, A01K 11/00, B29C 57/10

(54) **Method of assembling an implantable miniature transponder**
Herstellungsverfahren für einen implantierbaren Miniaturtransponder
Procédé de fabrication d'un transpondeur miniature implantable

(43) Date of publication of application: 18.03.2009
(73) Proprietor: Datamars SA, 6930 Bedano-Lugano (CH)
(72) Inventor: Nizzola, Luca, 6702 Claro (CH); Pachoud, Damien, 6963 Pregassona (CH); Stegmaier, Peter, 6946 Ponte Capriasca (CH)
(74) Representative: Kaminski Harmann

(56) References cited:
- EP-A- 0 167 160
- JP-A- 5 123 784
- US-A- 4 992 794
- US-A1- 2004 211 785

## Description

The present invention relates generally to a method of assembling an implantable miniature transponder according to claim 1.

Miniature radio frequency transponders are known to be useful for example for identification, information storage, access control, security and validation, as well as for comparable other purposes. The transponder described here will be used in particular for fitting in living creatures. Such transponders are implanted in the living body of an animal or a person by tissue implantation, e.g. with the help of an injection needle, for the identification of the creature. For the purpose of implantation, a miniaturized construction which incorporates transmitting/receiving circuits in an enclosure is required. A typical implantable miniature transponder known as prior art has a tubular, cylindrical shape, in particular the shape of a cone-shaped suppository. The outer dimensions of the transponder's enclosure usually have a diameter of about 1 to 2.5 millimetres and a length of 10 to 20 millimetres. These dimensions are suitable for the implantation in a domestic animal like a cat or a dog, or in the human body. For some applications and bodies, e.g. the body of a very small animal like a mouse or bird, or the body of a large animal like cattle or a horse, other dimensions and shapes are used. Since the range of the transmitter is linked with the size of its antenna, the use of a larger transponder having a long range may be useful for some applications.

Most transponders include a wire-wound electromagnetic, magnetic or electrical antenna, for example consisting of a ferrite rod surrounded by a coil, electrically connected to an integrated circuit which, in response to received transmitted energy obtained from the antenna, generates a response signal which is retransmitted to and through the antenna to a nearby reader. In other words, the integrated circuit is coupled to an induction coil, i.e. the electromagnetic, magnetic or electrical antenna, which enables the transponder to receive and utilize incident electromagnetic wave energy for power and to retransmit electromagnetic response signals. Initially, an operator, using a hand-held or other type of transmitter/reader, directs a magnetic field toward the implanted transponder. This energy, usually in the form of an electromagnetic radio wave, induces a current in the induction coil which charges a minute capacitor or similar energy storage component. After being energized, the transponder device sends back the information in the form of an electromagnetic wave which carries the identification information to an appropriate receiver, thus enabling identification of the transponder and, consequently, the carrier of the transponder. In this way, the animal or person can be recognised individually.

The integrated circuit, in particular in form of a semiconductor chip, may be mounted on a miniature printed circuit board being connected to the antenna and arranged on the end of the cylindrical antenna. Preferably, both the chip and the printed circuit board have such a small dimension that they are not wider and higher than the cross section of the antenna so as to align the antenna and the printed circuit board with the chip. The chip usually has a transmitter/receiver module and a memory module. In presence of a magnetic field, as described above, the energy supplied to the transponder will be used to transmit the data present in the memory, usually a unique coding.

An implantable transponder can be fitted in the body of a living creature in numerous locations. The transponder may already be fitted in an animal at a young age. It is important that the transponder does not emerge from the body or does not disappear if the animal is wounded. It may also be important that the transponder can be found easily for removal after the animal has died, possibly at the time of slaughter. Some transponders, above all transponders with an enclosure made of glass, are very fragile and create a lot of small and sharp particles when breaking, so that a location which is exposed to mechanical forces should be avoided.

U.S. Pat. No. 5,148,404 describes a transponder comprising a closed glass casing in which electrical components are placed, wherein the glass incorporates iron oxide. Furthermore, a method for the production of a transponder as described above is disclosed. A tubular glass part is provided which is already sealed on one side. The electrical components are then introduced and the other side is sealed. The transponder can be sealed with the aid of a gas flame and, in the case of glass containing iron oxide, the sealing can be carried out by means of infrared welding or high-frequency welding. The transponder is characterized by a high frangibility due to the fragile and inflexible glass enclosure. Consequently, the risk of destruction in case of external forces acting on the transponder is very high.

U.S. Pat. No. 4,992,794, against which the independent claim is delimited, discloses a transponder with an enclosure having an outside which is essentially made of plastic material. The plastic material is thermoplastic polyester. In order to avoid problems with sterilizing, the enclosure is made by injection molding. According to the description of said invention, the use of the plastic used has the disadvantage that the absorption of moisture cannot be ruled out to the same extent as with the use of glass. In order to avoid the adverse consequences of this on the electrical contents of the transponder, the space between the holder and the electrical parts is at least partially filled with a plastic material such as polysiloxane material. In order to make this polysiloxane material penetrate well at all points, the holder is preferably filled at reduced pressure. The enclosure consists of a plastic tube, which is of bottom-closed character, having one open end in which the electrical contents of the transponder is inserted, shut off by a plastic cap which closes the open end. Since the enclosure consists of two separate parts, namely a tube and a cap, and since the tiny cap has to be accurately positioned at the open end of the tube and hermetically joined to the tube, e.g. by welding, ultrasonic welding or adhesive, for closing the interior of the tube, the manufacturing process of the transponder is very complex.

U.S. Pat. No. 5,731,957 describes a transponder having a package formed of so-called hybridplastic, i.e. synthetic resin material, namely a suitable polymerized composition, which polymer is tougher than glass; which will absorb impact energy; which is resistant to cracking; which will be less likely to transfer shock to the electronics within the package; and which incorporates a cushioning medium, as in the form of silicone oil or gel, within the package for surrounding the electronics and protecting it and immobilizing it by submergence of the electronics within the cushioning medium. A specific polymer is preferred to provide requisite toughness, namely a synthetic resin commercially available under the trade name VECTRA. The main body of such material, as may be formed according to preference by being injection molded, extruded or thermoformed, and thereafter machined if necessary, is preferably in the form of an elongate closed tube as shown in said U.S. Pat No. 4,992,794, being exemplary of circular cross section, and having a rounded closed bottom, but closed at the opposite end by a cap, so that both ends may be of the same or similar rounded configuration, or the opposite end may be squared off in accordance with preferred usage for the ultimate technical application of the transponder. The interior of the transponder is sealed by placing the cap onto the open mouth of the bottom-closed tube and ultrasonically welding the cap to the tube to bring about a hermetic seal between the tube and the cap. Due to the need of a separate cap and a complicated sealing process to seal the interior of the transponder with the cap, the closure process is still very complex and expensive.

Japanese Pat. No. 5 - 123784 discloses a molded tube for use in e.g. hydraulic press, has sealed end that is connected to tube body and including wall thickness larger than wall thickness of tube body, where inner wall of sealed end tapers toward outwardly.

U.S. Patent Application Publication No. US 2004211785 describes a pipe end closing method for fluid container - comprises forming pipe end into control form by pressing with moulding tool kept at defined angle and forming pipe end into semi-spherical form by pressing with tool transferred into arc state.

It is therefore an object of the present invention to provide an assembly method of a robust, long-lived and essentially cracking- and shatter-resistant transponder which does not have these disadvantages and which can be efficiently manufactured by using an automated safe process.

This object is achieved by realising the features of the independent claim. Features which further develop the invention in an alternative or advantageous manner are described in the dependent patent claims.

The implantable miniature transponder to be assembled comprises an elongate tubular plastic enclosure and a transponder unit. The enclosure has a hollow interior enclosed by a generally cylindrical wall, defining a longitudinal axis, a first end of the cylindrical wall defining a first circular open mouth and a second end opposite to the first end. The transponder unit has an antenna and an integrated circuit, electrically connected to the antenna and so designed that in response to received transmitted energy obtained from the antenna, a response signal which is retransmitted to and through the antenna is generated. The method comprises the steps of inserting said transponder unit within the hollow interior of said enclosure, externally touching the first end with a forming tool, and completely closing the first end by reducing the width of the first mouth by means of deforming the first end inwards with the forming tool until the first mouth is totally closed.

The implantable miniature transponder to be assembled by the invention comprises an elongate tubular plastic enclosure and a transponder unit. The enclosure has a hollow interior enclosed by a generally cylindrical wall, a first end of the cylindrical wall and a second end opposite of the first end. Both the first end and the second end are completely closed. The transponder unit is located within the hollow interior and is completely enclosed within the enclosure. The transponder unit has an antenna and an integrated circuit, electrically connected to the antenna and so designed that in response to received transmitted energy obtained from the antenna, a response signal which is retransmitted to and through the antenna is generated. According to the invention the tubular plastic enclosure comprising the cylindrical wall, the closed first end and the closed second end is a single thermoplastic piece. In particular, the thermoplastic material is a liquid crystal polymer, in particular having mineral filler, and the first end is completely closed by a hot deformation closure.

The invention will be explained in greater detail below with reference to examples of possible embodiments shown schematically in the drawings, in which:
- Fig. 1a: shows a side view of the transponder unit;
- Fig. 1b: shows a side view in cross section of the enclosure;
- Fig. 1c: shows the transponder unit inserted within the hollow interior of the enclosure;
- Fig. 1d: shows the transponder unit being completely closed within the enclosure;
- Fig. 2a: shows the enclosure chucked in a rotatable chuck mechanism;
- Fig. 2b: shows the step of filling the enclosure with a predetermined volume of silicone material;
- Fig. 2c: shows the step of coating the transponder unit with a thin layer of parylene;
- Fig. 2d: shows the step of inserting the transponder unit within the hollow interior of the enclosure;
- Fig. 2e: shows the step of causing a relative rotation between the enclosure and a forming tool, which is laterally positioned to the first end, wherein the forming tool is heated by resistance or inductive heating means;
- Fig. 2f: shows the step of completely closing the first end by reducing the width of the first mouth by means of deforming the first end inwards with the heated forming tool until the first mouth is totally closed;
- Fig. 2g: shows the step of cooling down the enclosure by a second active air cooling;
- Fig. 2h: shows the step of taking at least one picture of the first end and reproducing the captured picture by a video monitor for quality assurance;
- Fig. 3: shows the alternative step of causing a relative rotation between the enclosure and the forming tool, wherein the first end is exposed to heat by a second laser beam; and
- Fig. 4: shows the alternative step of causing a relative rotation between the enclosure and a forming tool, which is axially positioned to the first end, wherein the forming tool is heated by a laser beam.

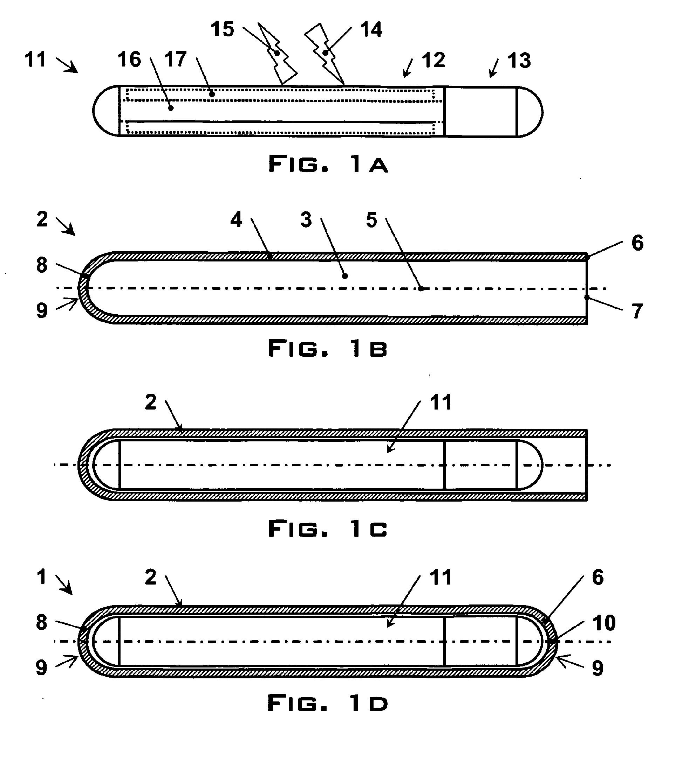

In the following, Figures 1a to 4 are described in some cases together, reference numerals already explained beforehand in individual Figures not being discussed again separately.

The method according to the invention serves for assembling an implantable miniature transponder 1, as shown in Figure 1d, to be used in particular for fitting in living creatures with the help of an injection needle, for the purpose of identifying the creature by connecting with the transponder 1. The transponder 1 to be assembled comprises an elongate tubular plastic enclosure 2, which is shown in unassembled open status in Figure 1b. The enclosure 2 has a hollow interior 3 enclosed by a cylindrical wall 4, for example having a circular or elliptical cross section. The cylindrical wall 4 defines a longitudinal central axis 5, as shown in dash-dotted line in Figures 1b to 1d. The enclosure 2 has first the function of protecting an electronic transponder unit 11, cf. Figure 1a, against fluids, moisture and contamination, and second to give a mechanical resistance against shock and stresses. The transponder unit 11, shown in Figure 1a without the enclosure 2, provides the transponder functionality. The plastic material used for the enclosure 2 is transmissible for radio waves to ensure the operability of the transponder unit 11. The enclosure 2 is formed of a plastic material, in particular a thermoplastic material which can be residually deformed by being exposed to heat, by being exposed to external force and by being cooled down again. In an advantageous embodiment of the invention, the thermoplastic material is a liquid crystal polymer, in particular having mineral filler, which is tough and resilient and will not be damaged by being dropped, and which is intrinsically capable of absorbing shock to a substantial degree, and which adheres to the tissue of the body after implantation. For example, such a liquid crystal polymer is commercially available under the trade name VECTRA A530 or MT1345 from TICONA, having 30% mineral filler. Any other type of plastic material which mainly meets the above mentioned needs can be used.

The hollow cylindrical wall 4 of the plastic enclosure 2 has a first end 6 defining a first circular open mouth 7, or in other words a circular opening, and a second end 8 opposite to the first end 6, as shown in Figure 1b. The second end 8 is either also open, defining a second circular open mouth, not shown in the Figures, or is closed and, in particular, having a dome-shaped exterior 9, as shown in Figure 1b. Although a dome-shaped or hemispherical exterior, having an outer diameter which corresponds to the outer diameter of the hollow cylindrical wall 4, is advantageous for implantation, other shapes of closed ends are possible.

If the enclosure 2 has two open mouths (not shown in the Figures), the following steps of closing the first mouth 7 of the first end 6 can be also performed to close the second mouth of the second end 8, preferably before the method of assembling is performed as described.

The enclosure may be formed by injection molding, extrusion or thermoforming, and thereafter machined if necessary.

The transponder 1 to be assembled further comprises the transponder unit 11 which provides the transponder functionality known from the prior art. The transponder unit 11, as shown in Figure 1a, has an electromagnetic, magnetic or electrical antenna 12, in particular comprising a ferrite rod 16 and a coil 17, and an integrated circuit 13, electrically connected to the antenna 12 and so designed that in response to received transmitted energy 14 obtained from the antenna 12, a response signal 15 which is retransmitted to and through the antenna 12 is generated, as illustrated in Figure 1a.

In a preferred embodiment, the integrated circuit is coupled to an induction coil 17, which enables the transponder unit 11 to receive and utilize incident electromagnetic wave energy 14 for power and to retransmit electromagnetic response signals 15. After being energized by said wave energy 14, the transponder unit 11 sends back the information stored in the integrated circuit 13 in the form of an electromagnetic wave 15 which carries the identification information to an appropriate receiver, thus enabling identification of the transponder unit 11 to individually recognise the creature which carries the transponder 1, as described above and known from the prior art.

According to the invention, other types of transponder units 11 which operate actively instead of passively, as the type described above, may be used.

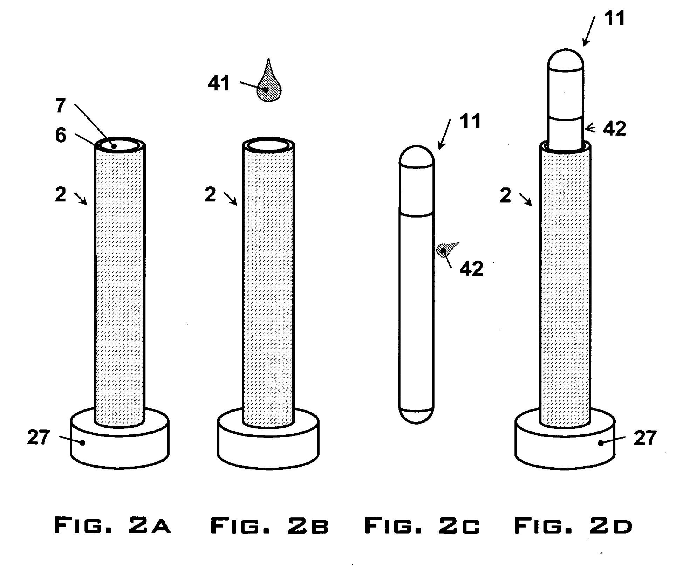

According to the invention, the method of assembling the implantable miniature transponder 1, as shown in Figure 1d, by using the above mentioned elongate tubular plastic enclosure 2 which is either of open character on both ends (not shown) or, preferably, of closed character on the second end (cf. Figure 1b), and by using the above mentioned transponder unit 11, (cf. Figure 1a) is described in the following, referring to Figures 2a to 4.

In the embodiment shown, the enclosure 2 is chucked in a rotatable chuck mechanism 27, preferably before the transponder unit is inserted, the first end 6 and the first circular open mouth 7 facing upwards, as shown in Figure 2a.

In a possible embodiment of the invention the enclosure 2 is optionally filled with a predetermined volume of silicone material 41, e.g. a silicone fluid like a silicone oil or gel, before the transponder unit 11 is inserted within the hollow interior 3 of the enclosure 2, as shown in Figure 2b, so that the silicone material 41 completely surrounds the transponder unit 11 after its insertion, preferably in all directions. Alternatively, it is possible to fill in the silicone material 41 after the transponder unit 11 is inserted within the hollow interior 3. The silicone material 41 acts as a cushioning medium for protecting the transponder unit 11 against external forces and fixes the transponder unit 11 into the enclosure 2.

Before the insertion in the plastic enclosure 2, the transponder unit 11 can optionally be coated with a thin layer, in particular a few micrometers of polymer, typically parylene material 42, in order to protect and insulate it, as shown in Figure 2c. The parylene layer 42 covers the entire transponder unit 11 and creates a barrier against moistures. Parylene is a polymer known from the prior art often used as mechanical, electrical and/or thermal barrier and
characterized by a very good adhesion. Parylene polymers can be formed as structurally continuous films from as thin as fraction of a micrometer to as thick as several mils and are an excellent barrier against organic and inorganic solvents.

Different types of parylene usable for the above mentioned application are known from the prior art.

The transponder unit 11 is inserted or led into the hollow interior 3 of the enclosure 2, preferably through the first open mouth 7 of said enclosure 2, the first mouth 7 facing upwards, so that the transponder unit 11 is totally enclosed by the enclosure 2 in radial direction, particularly by the cylindrical wall 4. Figure 2d shows the step of inserting the transponder unit 11 into the enclosure 2. After insertion, the transponder unit 11 does preferably not tower above the edge of the first end 6 and the upper end of the transponder unit 11 is below the first open mouth 7. The transponder unit 11 is inserted within the hollow interior 3 of said enclosure 2 either manually or with the help of a machine, e.g. a handling device, a funnel, a robot or a manipulator.

The transponder unit 11 is now located in the enclosure 2, as also shown in Figure 1c, which shows a side view in cross section of the enclosure 2. To completely close the first open mouth 7, so that no moisture can seep into the enclosure 2 and so that any contact between the moisture surrounding the injected transponder 1 and the transponder unit 11 is avoided, the following closure process is performed, first described briefly and then in more detail.

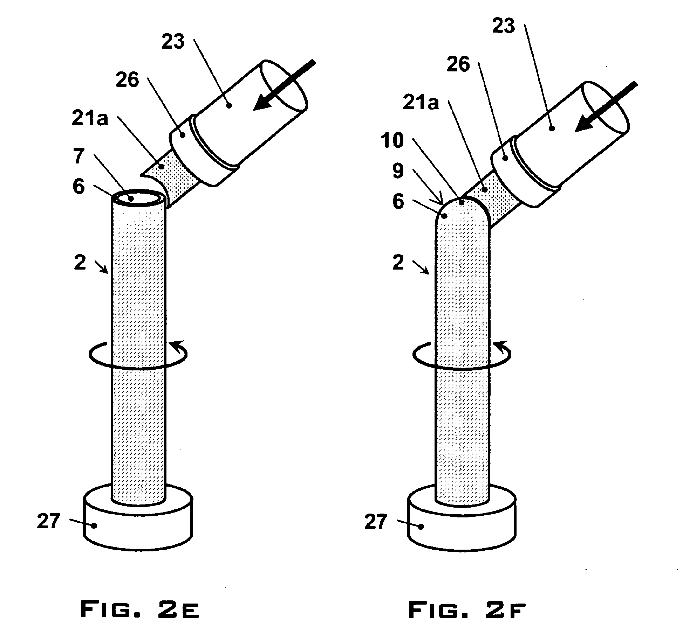

At least a part of a forming tool 21a is laterally and/or axially positioned to the first end 6, as shown in figure 2e. The forming tool 21a externally touches the first end 6 of the enclosure 2, see Figure 2f. An external pressure is applied to the first end 6 with the forming tool 21a by causing a relative movement between the first end 6 and the forming tool 21a, so that the forming tool 21a is moved towards the first end 6 in a direction radial, skew or parallel to the longitudinal central axis of the enclosure, depending on the shape of the forming tool 21a. It is possible to move the forming tool 21a and/or the enclosure 2 so that external pressure is applied to the first end. The shape of the forming tool 21a as well as the direction and amount of external pressure is such that the width of the first mouth 7 is reduced by means of annularly deforming the first end 6 inwards with the forming tool 21a until the mouth 7 is totally closed and the first end 6 is completely closed. Thus, no moisture, in particular body fluids of the creature bearing the transponder 1 can get into the enclosure 2 any more.

Further possible embodiments of this closure process are described more specifically in the following.

During the step of externally touching the first end 21a, applying external pressure to the first end 6 and deforming the first end 6 with the forming tool 21a, it is advantageous to cause a relative rotation between the enclosure 2 and the forming tool 21a about the longitudinal axis 5 of the enclosure 2, as shown in Figure 2e. Preferably, said relative rotation between the enclosure 2 and the forming tool 21a is caused by rotating the enclosure 2 about the axis 5. For this purpose, the enclosure 2 may be chucked in a rotatable chuck mechanism 27, preferably before the transponder unit 11 is inserted, as shown in Figure 2e. Nevertheless, it is also possible to rotate the forming tool 21a instead of the enclosure 2, or to rotate both elements.

At least a part of the forming tool 21a, being laterally positioned to the first end 6, is traversable towards the first end 6, in particular in a linear direction, as illustrated by means of the straight arrow in Figures 2e to 2g. By moving the forming tool 21a towards the first end 6, the forming tool 21a touches it while the above mentioned relative rotational movement, illustrated by the curved arrow in Figures 2e to 2g, takes place between the forming tool 21a and the enclosure 2. The external pressure is applied to the first end 6 with the forming tool 21a, preferably by linearly moving the forming tool 21a in the direction of the first end, in direction of the straight arrow.

The part of the forming tool 21a which touches the first end 6 may be a crescent-shaped flat tool, in particular formed of metal, as shown by means of example in Figures 2e and 2f.

Depending on the movement of the forming tool for achieving the deformation and the closure of the first end 6, the use of any other suitable type of forming tool is possible. Preferably, the shape of the forming tool's part which touches the first end 6 as well as the movement of the forming tool 21a is such that the forming tool laterally touches the first end 6 from one single side. In particular, the forming tool is linearly moved towards the first end 6 along an axis which intersects the longitudinal axis with an angle that can vary between >0° and 90°, for example 90° to 60°, 90° to 45°, 90° to 30°, >0° to 30°, +0° to 45°, >0° to 60° or 30° to 60°, wherein >0° means marginally more than 0°. In the example shown in Figures 2e and 2f, the angle is about 45°. Of course, it is not necessary that the axis of movement of the forming tool really intersects the longitudinal axis 5 of the enclosure 2, since a skew setup is also possible as long as the forming tool is movable such that the width of the first mouth 7 can be reduced by means of deforming the first end 6 inwards with the forming tool.

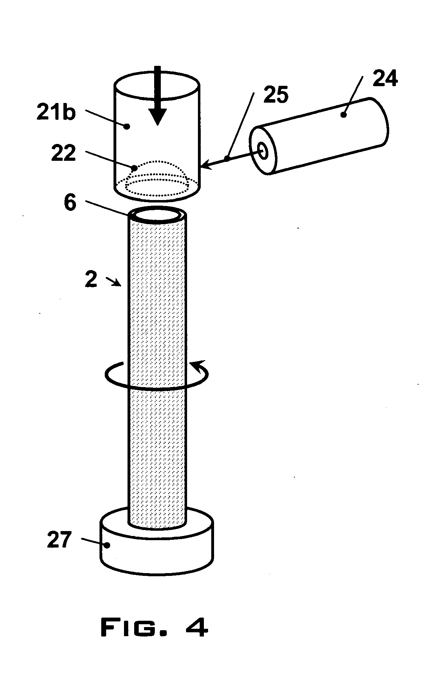

Instead of using a forming tool 21a which is laterally positioned to the first end 6, which is traversable towards the first end 6 in particular in a direction which is non-parallel to the longitudinal axis 5 and which laterally applies external pressure to the first end 6 from one or more sides and consequently not from all sides simultaneously, so said a relative rotation between the forming tool 21a and the enclose 2 has to be caused to annularly deform the first end 6 inwards with the forming tool 21a until the mouth 7 is totally closed, as described above and shown in Figures 2e and 2f, it is possible to use a forming tool 21b which is axially positioned to the first end 6 and which is axially traversable along the longitudinal axis 5 towards the first end 6, in particular parallel or collinear to the said axis, as illustrated in Figure 4. The external pressure is applied to the first end 6 by axially moving the forming tool 21b toward the first end 6 parallel or collinear to the axis. For this purpose, the forming tool 21b has a concave cavity 22 which encloses the first end 6 when externally touching the first end 6 and applying external pressure to it. The concave cavity 22 is, for example, semi-spherical (cf. Figure 4), bell-shaped or cone-shaped, or has another suitable shape for deforming the first end 6 inwards when applying pressure onto the first circular open mouth 7. In case of such a forming tool 21b which annularly applies pressure to the first end 6 inwards, the closure process can be performed without relative rotation between the forming tool and the enclosure, or with such a relative rotation, as illustrated in figure 4.

All the above mentioned closure processes as described above have in common that the enclosure is closed without necessarily using any other part or element, such as a cap, like known from the prior art, or an adhesive. A single piece, i.e. the tubular plastic enclosure 2, is used to completely enclose the sensitive transponder unit 11. This has a considerable effect on the whole process of assembling the transponder 1 since it is possible to encapsulate the transponder unit 11 by using a single part, namely one tubular enclosure 2. Furthermore, the single-piece plastic enclosure 2 ensures a long durability of the transponder 1 within the body. An efficient and persistent manufacturing process is achieved by this invention.

In an embodiment of the invention, the first end is deformed and the mouth is closed such that a dome-shaped or hemispherical exterior is formed, as shown in figure 2f. Preferably, both the first end 6 and the second end 8 may be of the same or similar rounded configuration, although possibly manufactured in different manners, e.g. the first end 6 being closed by the method as described above and the second end 8 being closed by injection molding the enclosure 2.

In a further embodiment of the invention, the plastic enclosure 2 is formed of a thermoplastic material, which can be plastically deformed when exposed to heat, preferably a liquid crystal polymer, in particular having mineral filler.

For supporting the deformation of the first end 6 and the closure, the first end 6 can be exposed to heat before and/or while the external pressure is applied and deforming the first end 6 so that the deformation and the closure of the first end 6 is at least partially achieved by hot deformation. Depending on the plastic material used, the first end 6 is heated to a specific temperature, for example 200 to 300 degree centigrade.

There are several possibilities to heat the first end for facilitating the deformation. It is possible to heat the first end 6 solely by frictional heat, caused by touching the first end 6 with the forming tool 21a or 21b. It is also possible to heat the forming tool 21a or 21b to a specific temperature, in particular 200 to 300 degree centigrade, to expose the first end 6 to heat. For example, as shown in Figures 2e and 2f, the forming tool 21a or 21b (not shown) can be heated by resistance or inductive heating means 23. It is also possible to heat the forming tool 21a (not shown) or 21b by means of a laser beam 25, emitted by laser means 24, see Figure 4, wherein the laser beam 25 is directed towards the forming tool 21a (not shown) or 21b.

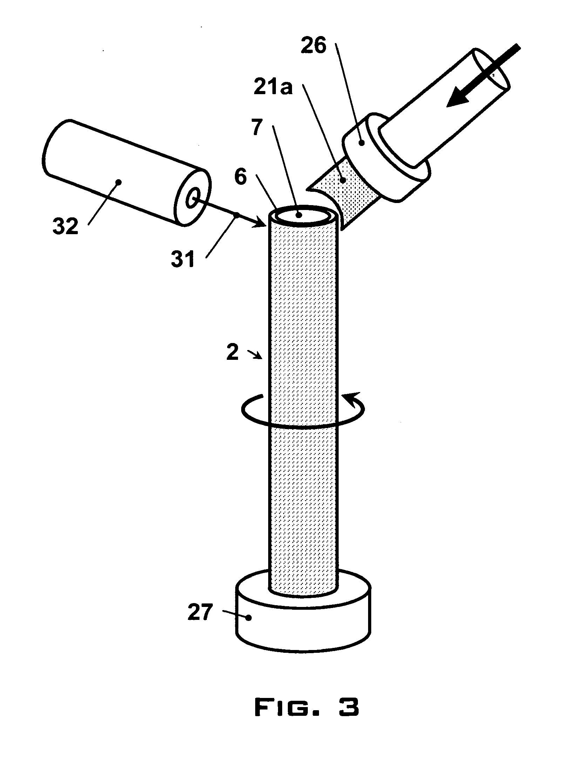

Alternatively, the first end 6 is directly exposed to heat, for example by a second laser beam 31, emitted by second laser means 32, wherein the second laser beam 31 is directed towards the first end 6, as shown in Figure 3. In this case, no heating of the forming tool 21a is necessary so that no resistance or inductive heating means 23 is necessarily needed, as shown in Figure 3. Nevertheless, the direct heating of the first end 6, e.g. by the second laser beam 31, can be combined with heating the forming tool 21a or 21b, e.g. by resistance, inductive or laser heating means, as illustrated in Figures 2e, 2f and 4.

In another further embodiment, also shown in Figure 2f, the forming tool is cooled down by a cooling 26, in particular by active air cooling and/or water cooling, after the first end 6 has been deformed and the dome-shaped exterior 9 has been formed, so that the process of hardening is accelerated and stringing or cobwebbing is avoided.

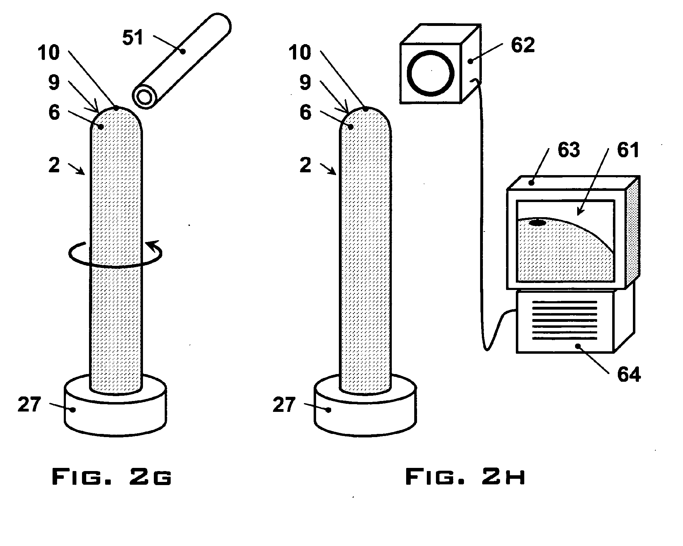

Additionally or alternatively, it is possible to cool down the enclosure 2, in particular by a second active air cooling 51 which is directed towards the enclosure 2, in particular the first end 6, after the first end 6 has been closed, to accelerate the whole process of hardening, as illustrated in Figure 2g.

In another further embodiment of the invention, as shown in Figure 2h, at least one picture 61 of the first end 6 is taken by using a digital or analogical camera 62. The captured picture 61 is reproduced by a video monitor 63 for using the captured picture 61 as quality assurance during and/or after the closure process. An inspector observing the process may then assess the quality of the closure of the first end 6. Alternatively or additionally, as also shown in Figure 2h, the quality of the closure is assessed by electronically processing the captured picture 61 by means of a signal processor 61, e.g. a personal computer executing image processing software, during and/or after the closure process.

Mainly the whole process as described above can be performed by automatic manipulating systems, controlled by a computer system. It is important that the above mentioned process takes place in a clean, reproducible manner with which no problems with contamination arise.

The invention also relates to an implantable miniature transponder 1, obtained by the method of assembling an implantable miniature transponder according to the invention.

Although the invention has been illustrated above partly with reference to some preferred embodiments, it must be understood that numerous modification and combinations of different features of the embodiments can be made as long as these modifications lie within the scope of the appended claims.

The invention is solely defined by the appended claims.

## Claims

1. Method of assembling an implantable miniature transponder (1) comprising.
• an elongate tubular plastic enclosure (2) having
□ a hollow interior (3) enclosed by a generally cylindrical wall (4), defining a longitudinal axis (5),
□ a first end (6) of the cylindrical wall (4) defining a first circular open mouth (7) and
□ a second end (8) opposite to the first end (6),
and
• a transponder unit (11) having
□ an antenna (12) and
□ an integrated circuit (13), electrically connected to the antenna (12) and so designed that in response to received transmitted energy (14) obtained from the antenna (12), a response signal (15) which is retransmitted to and through the antenna (12) is generated,
the method comprising the steps of:
• inserting said transponder unit (11) within the hollow interior (3) of said enclosure (2) and
• closing the first end (6),
**characterized in that** the step of closing the first end (6) is carried out by:
• externally touching the first end (6) with a forming tool (21a; 21b), and
• completely closing the first end (6) by reducing the width of the first mouth (7) by means of deforming the first end (6) inwards with the forming tool (21a; 21b) until the first mouth (7) is totally closed.

2. Method of assembling an implantable miniature transponder (1) according to claim 1, comprising the additional step
• causing a relative rotation between the enclosure (2) and the forming tool (21a; 21b) about the axis (5),
during the step of externally touching the first end (6) and deforming the first end (6) with the forming tool (21a; 21b), in particular wherein the relative rotation between the enclosure (2) and the forming tool (21a; 21b) is caused by rotating the enclosure (2) or the forming tool (21a; 21b) about the axis (5).

3. Method of assembling an implantable miniature transponder (1) according to claim 2, wherein
• at least a part of the forming tool (21a) is laterally positioned to the first end (6),
• the forming tool (21a) is traversable towards the first end (6) and
• externally touching the first end (6) and deforming the first end (6) with the forming tool (21a) is achieved by moving the forming tool (21a) in the direction of the first end (6).

4. Method of assembling an implantable miniature transponder (1) according to any one of claims 1 to 2, wherein
the forming tool (21b), in particular having a concave cavity (22), in particular having a semi-spherical concave cavity, is axially traversable and externally touching the first end (6) and deforming the first end (6) with the forming tool (21b) is achieved by axially moving the forming tool (21b) toward the first end (6).

5. Method of assembling an implantable miniature transponder (1) according to any one of claims 1 to 4, wherein
the first end (6) is deformed and the mouth (7) is closed such that a dome-shaped exterior (9) is formed.

6. Method of assembling an implantable miniature transponder (1) according to any one of claims 1 to 5, wherein
the enclosure (2) is formed of a thermoplastic material, in particular a liquid crystal polymer, in particular a liquid crystal polymer having mineral filler.

7. Method of assembling an implantable miniature transponder (1) according to any one of claims 1 to 6, wherein
the first end (6) is exposed to heat, in particular the forming tool (21a; 21b) is heated to a specific temperature, in particular to 200 to 300 degree centigrade, in particular by resistance or inductive heating means (23) or by a laser beam (25), before and/or while deforming the first end (6), and the closure is at least partially achieved by hot deformation of the first end (6).

8. Method of assembling an implantable miniature transponder (1) according to claim 7, comprising the additional step
• cooling down the forming tool (21a; 21b), in particular by active air and/or water cooling (26),
after having closed the first end (6).

9. Method of assembling an implantable miniature transponder (1) according to any one of claims 1 to 8, wherein
the first end (6) is exposed to heat by a second laser beam (31) which is directed towards the first end (6).

10. Method of assembling an implantable miniature transponder (1) according to any one of claims 1 to 9, wherein
the enclosure (2) is a plastic molded piece, wherein the second end (8) is closed, in particular having a dome-shaped exterior (9).

11. Method of assembling an implantable miniature transponder (1) according to any of claims 1 to 10, comprising the additional step
• filling the enclosure (2) with a predetermined volume of silicone material (41)
before inserting the transponder unit (11) within the hollow interior (3) of the enclosure (2).

12. Method of assembling an implantable miniature transponder (1) according to any of claims 1 to 11, comprising the additional step
• coating the transponder unit (11) with a thin layer of parylene (42)
before inserting the transponder unit (11) within the hollow interior (3) of the enclosure (2).

13. Method of assembling an implantable miniature transponder (1) according to any one of claims 1 to 12, comprising the additional step
• cooling down the enclosure (2), in particular by a second active air cooling (51),
after having closed the first end (6).

14. Method of assembling an implantable miniature transponder (1) according to any one of claims 1 to 13, comprising the additional steps
• taking at least one picture (61) of the first end (6) by using a digital camera (62) and
• reproducing the captured picture (61) by a video monitor (63) for using the captured picture (61) as quality assurance
during and/or after the closure process.

15. Method of assembling an implantable miniature transponder (1) according to any one of claims 1 to 12, comprising the additional steps
• taking at least one picture (61) of the first end by using a digital camera (62) and
• assessing the quality of the closure by electronically processing the captured picture (61) by means of a signal processor (64)
during and/or after the closure process.

16. Method of assembling an implantable miniature transponder (1) according to any one of claims 1 to 15, wherein
the antenna (12) is an electromagnetic, magnetic or electrical antenna, in particular the antenna (12) comprises a ferrite rod (16) and a coil (17).

## Patentansprüche

1. Herstellungsverfahren für einen implantierbaren Miniaturtransponder (1), umfassend
• ein langgestrecktes rohrförmiges Kunststoffgehäuse (2) mit
○ einem hohlen Innenraum (3), der von einer im Allgemeinen zylindrischen Wand (4) umschlossen wird und eine Längsachse (5) definiert,
○ einem ersten Ende (6) der zylindrischen Wand (4), das eine erste kreisförmige offene Öffnung (7) definiert, und
○ einem zweiten Ende (8), das dem ersten Ende (6) gegenüberliegt, und
• eine Transpondereinheit (11) mit
○ einer Antenne (12) und
○ einer integrierten Schaltung (13), die elektrisch mit der Antenne (12) verbunden ist und derart ausgebildet ist, dass sie in Abhängigkeit von der empfangenen übertragenen Energie (14), die ausgehend von der Antenne (12) empfangen wird, ein Antwortsignal (15) erzeugt wird, das zu der und durch die Antenne (12) zurückgesendet wird,
wobei das Verfahren die folgenden Schritte umfasst:
• Einsetzen der Transpondereinheit (11) in den hohlen Innenraum (3) des Gehäuses (2) und
• Verschließen des ersten Endes (6),
**dadurch gekennzeichnet, dass** der Schritt des Verschließens des ersten Endes (6) wie folgt durchgeführt wird:
• von außen erfolgendes Berühren des ersten Endes (6) mit einem Formwerkzeug (21a; 21b), und
• vollständiges Verschließen des ersten Endes (6) durch Verringern der Breite der ersten Öffnung (7), indem das erste Ende (6) mit dem Formwerkzeug (21a; 21b) einwärts verformt wird, bis die erste Öffnung (7) vollständig verschlossen ist.

2. Herstellungsverfahren für einen implantierbaren Miniaturtransponder (1) nach Anspruch 1, umfassend den zusätzlichen Schritt
• des Hervorrufens einer relativen Drehung zwischen dem Gehäuse (2) und dem Formwerkzeug (21a; 21b) um die Achse (5)
während des Schritts des Berührens des ersten Endes (6) von außen und des Verformens des ersten Endes (6) mit dem Formwerkzeug (21a; 21b), wobei insbesondere die relative Drehung zwischen dem Gehäuse (2) und dem Formwerkzeug (21a; 21b) durch Drehen des Gehäuses (2) oder des Formwerkzeugs (21a; 21b) um die Achse (5) hervorgerufen wird.

3. Herstellungsverfahren für einen implantierbaren Miniaturtransponder (1) nach Anspruch 2, wobei
• mindestens ein Teil des Formwerkzeugs (21a) seitlich am ersten Ende (6) positioniert wird,
• das Formwerkzeug (21a) zum ersten Ende (6) hin schwenkbar ist und
• das Berühren des ersten Endes (6) von außen und das Verformen des ersten Endes (6) mit dem Formwerkzeug (21a) erreicht wird, indem das Formwerkzeug (21a) in Richtung des ersten Endes (6) bewegt wird.

4. Herstellungsverfahren für einen implantierbaren Miniaturtransponder (1) nach einem der Ansprüche 1 bis 2, wobei das Formwerkzeug (21b), das insbesondere einen konkaven Hohlraum (22) aufweist und insbesondere einen halbkugelförmigen konkaven Hohlraum aufweist, axial schwenkbar ist und wobei das Berühren des ersten Endes (6) von außen und das Verformen des ersten Endes (6) mit dem Formwerkzeug (21b) erzielt wird, indem das Formwerkzeug (21b) axial zum ersten Ende (6) hin bewegt wird.

5. Herstellungsverfahren für einen implantierbaren Miniaturtransponder (1) nach einem der Ansprüche 1 bis 4, wobei das erste Ende (6) derart verformt wird und die Öffnung (7) derart geschlossen wird, dass ein kuppelförmiges Äußeres (9) gebildet wird.

6. Herstellungsverfahren für einen implantierbaren Miniaturtransponder (1) nach einem der Ansprüche 1 bis 5, wobei das Gehäuse (2) aus einem thermoplastischen Material hergestellt ist, insbesondere aus einem Flüssigkristallpolymer, insbesondere einem Flüssigkristallpolymer mit einem mineralischen Füllstoff.

7. Herstellungsverfahren für einen implantierbaren Miniaturtransponder (1) nach einem der Ansprüche 1 bis 6, wobei das erste Ende (6) Hitze ausgesetzt wird, wobei insbesondere das Formwerkzeug (21a; 21b) auf eine spezifische Temperatur, insbesondere 200 bis 300 Grad Celsius erhitzt wird, insbesondere durch einen Widerstand oder induktive Heizmittel (23) oder durch einen Laserstrahl (25), und zwar bevor und/oder während das erste Ende (6) verformt wird, wobei der Verschluss mindestens teilweise durch Warmverformung des ersten Endes (6) erzielt wird.

8. Herstellungsverfahren für einen implantierbaren Miniaturtransponder (1) nach Anspruch 7, umfassend den zusätzlichen Schritt
• des Abkühlens des Formwerkzeugs (21a; 21b) insbesondere durch aktive Luft- und/oder Wasserkühlung (26)
nach dem Verschließen des ersten Endes (6).

9. Herstellungsverfahren für einen implantierbaren Miniaturtransponder (1) nach einem der Ansprüche 1 bis 8, wobei das erste Ende (6) durch einen zweiten Laserstrahl (31), der zum ersten Ende (6) hin gerichtet wird, Hitze ausgesetzt wird.

10. Herstellungsverfahren für einen implantierbaren Miniaturtransponder (1) nach einem der Ansprüche 1 bis 9, wobei das Gehäuse (2) ein Formteil aus Kunststoff ist, wobei das zweite Ende (8) verschlossen ist und insbesondere ein kuppelförmiges Äußeres (9) aufweist.

11. Herstellungsverfahren für einen implantierbaren Miniaturtransponder (1) nach einem der Ansprüche 1 bis 10, umfassend den zusätzlichen Schritt
• des Füllens des Gehäuses (2) mit einem vorbestimmten Volumen an Silikonmaterial (41)
vor dem Einsetzen der Transpondereinheit (11) in den hohlen Innenraum (3) des Gehäuses (2).

12. Herstellungsverfahren für einen implantierbaren Miniaturtransponder (1) nach einem der Ansprüche 1 bis 11, umfassend den zusätzlichen Schritt
• des Beschichtens der Transpondereinheit (11) mit einer dünnen Schicht aus Parylen (42)
vor dem Einsetzen der Transpondereinheit (11) in den hohlen Innenraum (3) des Gehäuses (2).

13. Herstellungsverfahren für einen implantierbaren Miniaturtransponder (1) nach einem der Ansprüche 1 bis 12, umfassend den zusätzlichen Schritt
• des Abkühlens des Gehäuses (2) insbesondere durch eine zweite aktive Luftkühlung (51)
nach dem Verschließen des ersten Endes (6).

14. Herstellungsverfahren für einen implantierbaren Miniaturtransponder (1) nach einem der Ansprüche 1 bis 13, umfassend die zusätzlichen Schritte
• des Aufnehmens von mindestens einem Bild (61) des ersten Endes (6) mittels einer Digitalkamera (62) und
• des Wiedergebens des aufgenommenen Bilds (61) durch einen Videomonitor (63) zum Zweck der Verwendung des aufgenommenen Bilds (61) als Qualitätssicherung
während und/oder nach dem Verschlussvorgang.

15. Herstellungsverfahren für einen implantierbaren Miniaturtransponder (1) nach einem der Ansprüche 1 bis 12, umfassend die zusätzlichen Schritte
• des Aufnehmens von mindestens einem Bild (61) des ersten Endes mittels einer Digitalkamera (62) und
• des Beurteilens der Qualität des Verschlusses durch elektronisches Verarbeiten des aufgenommenen Bilds (61) mittels eines Signalprozessors (64)
während und/oder nach dem Verschlussvorgang.

16. Herstellungsverfahren für einen implantierbaren Miniaturtransponder (1) nach einem der Ansprüche 1 bis 15, wobei die Antenne (12) eine elektromagnetische, magnetische oder elektrische Antenne ist, wobei die Antenne (12) insbesondere einen Ferritstab (16) und eine Spule (17) umfasst.

## Revendications

1. Procédé d'assemblage d'un transpondeur miniature pouvant être implanté (1) comprenant
• une enveloppe en matière plastique tubulaire allongée (2) comportant
○ une partie intérieure évidée (3) entourée par une paroi globalement cylindrique (4), définissant un axe longitudinal (5),
○ une première extrémité (6) de la paroi cylindrique (4) définissant une première ouverture circulaire (7) et
○ une deuxième extrémité (8) opposée à la première extrémité (6), et
• une unité de transpondeur (11) comportant
○ une antenne (12) et
○ un circuit intégré (13), connecté électriquement à l'antenne (12) et conçu de telle sorte qu'en réponse à une énergie transmise reçue (14) obtenue à partir de l'antenne (12), un signal de réponse (15) qui est retransmis à et par l'intermédiaire de l'antenne (12) est généré,
le procédé comprenant les étapes consistant à :
• insérer ladite unité de transpondeur (11) dans la partie intérieure évidée (3) de ladite enveloppe (2) et
• fermer la première extrémité (6),
**caractérisé en ce que** l'étape de fermeture de la première extrémité (6) est réalisée par :
• le contact à l'extérieur de la première extrémité (6) avec un outil de formage (21a ; 21b), et
• la fermeture complète de la première extrémité (6) par la diminution de la largeur de la première ouverture (7) au moyen de la déformation de la première extrémité (6) vers l'intérieur avec l'outil de formage (21a ; 21b) jusqu'à ce que la première ouverture (7) soit totalement fermée.

2. Procédé d'assemblage d'un transpondeur miniature pouvant être implanté (1) selon la revendication 1, comprenant l'étape supplémentaire consistant à
• amener une rotation relative entre l'enveloppe (2) et l'outil de formage (21a ; 21b) autour de l'axe (5), durant l'étape de contact à l'extérieur de la première extrémité (6) et de déformation de la première extrémité (6) avec l'outil de formage (21a ; 21b), en particulier dans lequel la rotation relative entre l'enveloppe (2) et l'outil de formage (21a ; 21b) est provoquée par la rotation de l'enveloppe (2) ou de l'outil de formage (21a ; 21b) autour de l'axe (5).

3. Procédé d'assemblage d'un transpondeur miniature pouvant être implanté (1) selon la revendication 2, dans lequel
• au moins une partie de l'outil de formage (21a) est positionnée latéralement par rapport à la première extrémité (6),
• l'outil de formage (21a) peut être traversé en direction de la première extrémité (6) et
le contact à l'extérieur de la première extrémité (6) et la déformation de la première extrémité (6) avec l'outil de formage (21a) sont réalisés par le déplacement de l'outil de formage (21a) dans la direction de la première extrémité (6).

4. Procédé d'assemblage d'un transpondeur miniature pouvant être implanté (1) selon l'une quelconque des revendications 1 à 2, dans lequel l'outil de formage (21b), ayant en particulier une cavité concave (22), ayant en particulier une cavité concave demi-sphérique, peut être traversé axialement et le contact à l'extérieur de la première extrémité (6) et la déformation de la première extrémité (6) avec l'outil de formage (21b) sont réalisés par le déplacement axial de l'outil de formage (21b) vers la première extrémité (6).

5. Procédé d'assemblage d'un transpondeur miniature pouvant être implanté (1) selon l'une quelconque des revendications 1 à 4, dans lequel la première extrémité (6) est déformée et l'ouverture (7) est fermée de telle sorte qu'une partie extérieure en forme de dôme (9) est formée.

6. Procédé d'assemblage d'un transpondeur miniature pouvant être implanté (1) selon l'une quelconque des revendications 1 à 5, dans lequel l'enveloppe (2) est formée d'une matière thermoplastique, en particulier un polymère à cristaux liquides, en particulier un polymère à cristaux liquides comportant une matière de charge minérale.

7. Procédé d'assemblage d'un transpondeur miniature pouvant être implanté (1) selon l'une quelconque des revendications 1 à 6, dans lequel la première extrémité (6) est exposée à la chaleur, en particulier l'outil de formage (21a ; 21b) est chauffé à une température spécifique, en particulier à 200 jusqu'à 300 degrés centigrades, en particulier par un moyen de chauffage par résistance ou induction (23) ou par un faisceau laser (25), avant et/ou lors d'une déformation de la première extrémité (6), et l'enveloppe est au moins partiellement réalisée par une déformation à chaud de la première extrémité (6).

8. Procédé d'assemblage d'un transpondeur miniature pouvant être implanté (1) selon la revendication 7, comprenant l'étape supplémentaire consistant à
• refroidir l'outil de formage (21a ; 21b), en particulier par un refroidissement par air et/ou par eau actif (26),
après la fermeture de la première extrémité (6).

9. Procédé d'assemblage d'un transpondeur miniature pouvant être implanté (1) selon l'une quelconque des revendications 1 à 8, dans lequel la première extrémité (6) est exposée à la chaleur par un deuxième faisceau laser (31) qui est orienté vers la première extrémité (6).

10. Procédé d'assemblage d'un transpondeur miniature pouvant être implanté (1) selon l'une quelconque des revendications 1 à 9, dans lequel l'enveloppe (2) est une pièce moulée en matière plastique, dans lequel la deuxième extrémité (8) est fermée, ayant en particulier une partie extérieure en forme de dôme (9).

11. Procédé d'assemblage d'un transpondeur miniature pouvant être implanté (1) selon l'une quelconque des revendications 1 à 10, comprenant l'étape supplémentaire consistant à
• remplir l'enveloppe (2) avec un volume prédéterminé de matériau de silicone (41)
avant l'insertion de l'unité de transpondeur (11) dans la partie intérieure évidée (3) de l'enveloppe (2).

12. Procédé d'assemblage d'un transpondeur miniature pouvant être implanté (1) selon l'une quelconque des revendications 1 à 11, comprenant l'étape supplémentaire consistant à
• revêtir l'unité de transpondeur (11) avec une fine couche de parylène (42)
avant l'insertion de l'unité de transpondeur (11) dans la partie intérieure évidée (3) de l'enveloppe (2).

13. Procédé d'assemblage d'un transpondeur miniature pouvant être implanté (1) selon l'une quelconque des revendications 1 à 12, comprenant l'étape supplémentaire consistant à
• refroidir l'enveloppe (2), en particulier par un deuxième refroidissement par air actif (51),
après la fermeture de la première extrémité (6).

14. Procédé d'assemblage d'un transpondeur miniature pouvant être implanté (1) selon l'une quelconque des revendications 1 à 13, comprenant les étapes supplémentaires consistant à
• prendre au moins une image (61) de la première extrémité (6) par l'utilisation d'un appareil de prise de vues numérique (62) et
• reproduire l'image capturée (61) par un moniteur vidéo (63) destiné à utiliser l'image capturée (61) en tant qu'assurance qualité
au cours et/ou après le processus de fermeture.

15. Procédé d'assemblage d'un transpondeur miniature pouvant être implanté (1) selon l'une quelconque des revendications 1 à 12, comprenant les étapes supplémentaires consistant à
• prendre au moins une image (61) de la première extrémité par l'utilisation d'un appareil de prise de vues numérique (62) et
• évaluer la qualité de la fermeture par un traitement par voie électronique de l'image capturée (61) au moyen d'un dispositif de traitement de signaux (64)
pendant et/ou après le processus de fermeture.

16. Procédé d'assemblage d'un transpondeur miniature pouvant être implanté (1) selon l'une quelconque des revendications 1 à 15, dans lequel l'antenne (12) est une antenne électromagnétique, magnétique ou électrique, en particulier l'antenne (12) comprend un bâtonnet de ferrite (16) et une bobine (17).
